# EUROPEAN PATENT APPLICATION

(11) **EP 2 204 554 A2**
(43) Date of publication of application: **07.07.2010**
(21) Application number: 09179374.5
(22) Date of filing: 16.12.2009
(51) Int. Cl.: F01K 23/08, F02C 6/08

(54) **Method for expanding compressor discharge bleed air**

(30) Priority: 05.01.2009 US 348886
(71) Applicant: General Electric Company, Schenectady, NY 12345 (US)
(72) Inventor: Eluripati, Ravi Praveen, Simpsonville, SC 29681 (US); Ball, JR., David Wesley, Easley, SC 29642 (US); Sater, Brittany, Greenville, SC 29607 (US); Ranasinghe, Jatila, Simpsonville, SC 29681 (US)
(74) Representative: Gray, Thomas

(57) **Abstract**

A method for recovering energy from bleed air (68) from a compressor (20) of a gas turbine (12) is provided. The method includes directing bleed air (68) from a compressor (20) of a gas turbine (12) into a cooling unit (76). The bleed air (68) is compressed air from the compressor (20), and the bleed air (68) is not directed into a combustion chamber (18) of the gas turbine (12). The method also includes cooling the bleed air (68) within the cooling unit (76). The method further includes expanding the cooled bleed air (68) within a turbo-expander (72) to generate power.

## Description

The subject matter disclosed herein relates to gas turbines and, more specifically, to an improved method for recovering energy from compressed bleed air discharged from a compressor of a gas turbine.

A gas turbine system may bleed air from a compressor to control operational conditions and health of various components (e.g., no stall conditions). Unfortunately, bleeding compressor discharge air from a gas turbine may decrease the net efficiency, because the energy expended to raise the pressure of air within the compressor is not being recovered by the combustor and turbine. The amount of air bled from the compressor (i.e., "bleed air") may be a function of ambient conditions and gas turbine output. For example, the air bleeding may increase with lower gas turbine loads and lower ambient temperatures. By further example, air bleeding may increase when burning fuel with low energy values, e.g., measured in British thermal units (BTUs). In these low BTU fuel gas turbine applications, the fuel flow rate may be much higher than in natural gas fuel applications, and may cause additional backpressure on the compressor. Therefore, air bleeding the compressor flow may be desirable to reduce this backpressure and improve the stall margin of the compressor.

In one embodiment according to the present invention, a method for recovering energy from compressed air from a compressor of a gas turbine is provided. The method includes directing bleed air from a compressor of a gas turbine into a cooling unit. The bleed air is compressed air from the compressor, and the bleed air is not directed into a combustion chamber of the gas turbine. The method also includes cooling the bleed air within the cooling unit. The method further includes expanding the cooled bleed air within a turbo-expander to generate power.

In another embodiment, a gas turbine power generation system is provided. The system includes a gas turbine comprising a compressor, a combustion chamber, and a turbine component. The system also includes a cooling unit configured to receive and cool bleed air from the compressor. The bleed air is compressed air from the compressor, and the bleed air is not directed into the combustion chamber. The system further includes a turbo-expander configured to receive and expand the cooled bleed air to generate power.

In yet another embodiment, a bleed air and energy recovery system is provided. The system includes a cooling unit configured to receive and cool bleed air from a compressor. The system also includes a turbo-expander configured to receive and expand the cooled bleed air to generate power.

Various features, aspects, and advantages of the present invention will become better understood when the following detailed description is read with reference to the accompanying drawings in which like characters represent like parts throughout the drawings, wherein:
FIG. 1 is a schematic flow diagram of an embodiment of a combined cycle power generation system having a gas turbine, a steam turbine, and a heat recovery steam generation (HRSG) system;
FIG. 2 is schematic flow diagram of an exemplary embodiment of the air bleed and energy recovery system coupled to the gas turbine and the HRSG of the combined cycle power generation system of FIG. 1;
FIG. 3 is a schematic flow diagram of an exemplary embodiment of the air bleed and energy recovery system coupled to the gas turbine and the HRSG of the combined cycle power generation system of FIG. 1, utilizing a turbo-expander for recovering energy in the bleed air;
FIG. 4 is a schematic flow diagram of an exemplary embodiment of the air bleed and energy recovery system coupled to the gas turbine and the HRSG of the combined cycle power generation system of FIG. 1, utilizing both a turbo-expander and an associated pre-cooling unit;
FIG. 5 is a schematic flow diagram of an exemplary embodiment of the air bleed and energy recovery system coupled to the gas turbine and the HRSG of the combined cycle power generation system of FIG. 1, utilizing the turbo-expander and associated pre-cooling unit of FIG. 4, wherein boiler feedwater from a high-pressure boiler feedwater pump is used as the cooling fluid; and
FIG. 6 is a flow chart of an embodiment of a method for recovering energy from bleed air from the compressor of the gas turbine of the combined cycle power generation system of FIG. 1.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

In certain embodiments, the systems and methods described herein include recovering energy from bleed air discharged from a compressor of a gas turbine. Bleeding compressed air from a compressor of a gas turbine may help prevent the compressor from stalling. However, by simply venting the compressed air to the atmosphere, energy expended by the compressor to compress the air will not be recovered. Therefore, in certain embodiments, the bleed air may be directed into other processes where the energy within the bleed air may be recovered. For instance, the bleed air may be directed into a turbo-expander, within which the bleed air may be expanded, thereby generating power. This generated power may, in turn, be used to drive various loads, such as an electrical generator.

In addition, the bleed air from the compressor may be characterized by both high pressures and high temperatures. Therefore, prior to being expanded within the turbo-expander, the bleed air may be cooled within a pre-cooling unit. Specifically, within the pre-cooling unit, heat may be transferred from the bleed air into a cooling fluid, such as boiler feedwater. Since the temperature of the bleed air may be reduced before expansion within the turbo-expander, the turbo-expander may be sized to handle lower temperatures, thereby reducing the cost of the turbo-expander since, among other reasons, high temperature resistant materials may not be necessary. Furthermore, in addition to recapturing energy within the bleed air in the turbo-expander, the heat transferred from the bleed air into the cooling fluid may also be recaptured in other processes.

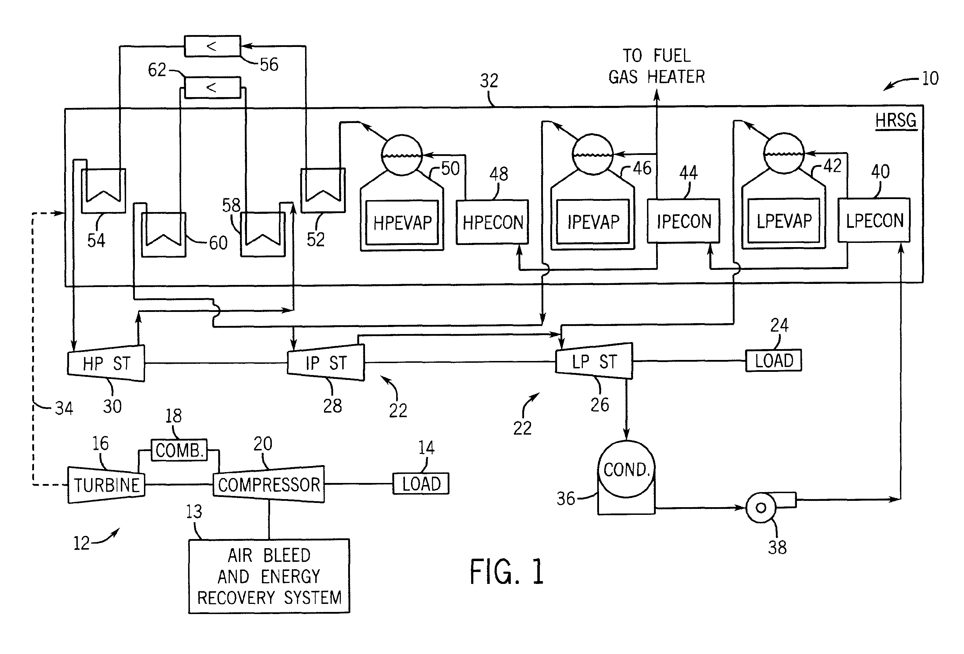

FIG. 1 is a schematic flow diagram of an embodiment of a combined cycle power generation system 10 having a gas turbine, a steam turbine, and a heat recovery steam generation (HRSG) system. The system 10 may include a gas turbine 12 having an air bleed and energy recovery system 13, as discussed in detail below. The gas turbine 12 is configured to drive a first load 14. The first load 14 may, for instance, be an electrical generator for producing electrical power. The gas turbine 12 may include a turbine 16, a combustor or combustion chamber 18, and a compressor 20. The air bleed and energy recovery system 13 may bleed air from the compressor 20 to control operational conditions and health of the gas turbine 12, while also recovering energy from the high pressure, high temperature, or flow of the air bleeding from the compressor 20.

The system 10 may also include a steam turbine 22 for driving a second load 24. The second load 24 may also be an electrical generator for generating electrical power. However, both the first and second loads 14, 24 may be other types of loads capable of being driven by the gas turbine 12 and steam turbine 22. In addition, although the gas turbine 12 and steam turbine 22 may drive separate loads 14 and 24, as shown in the illustrated embodiment, the gas turbine 12 and steam turbine 22 may also be utilized in tandem to drive a single load via a single shaft. In the illustrated embodiment, the steam turbine 22 may include one low-pressure section 26 (LP ST), one intermediate-pressure section 28 (IP ST), and one high-pressure section 30 (HP ST). However, the specific configuration of the steam turbine 22, as well as the gas turbine 12, may be implementation-specific and may include any combination of sections.

The system 10 may also include a multi-stage HRSG 32. The components of the HRSG 32 in the illustrated embodiment are a simplified depiction of the HRSG 32 and are not intended to be limiting. Rather, the illustrated HRSG 32 is shown to convey the general operation of such HRSG systems. Heated exhaust gas 34 from the gas turbine 12 may be transported into the HRSG 32 and used to heat steam used to power the steam turbine 22. Exhaust from the low-pressure section 26 of the steam turbine 22 may be directed into a condenser 36. Condensate from the condenser 36 may, in turn, be directed into a low-pressure section of the HRSG 32 with the aid of a condensate pump 38.

The condensate may then flow through a low-pressure economizer 40 (LPECON), e.g., which is a device configured to heat feedwater with gases, which may be used to heat the condensate. From the low-pressure economizer 40, the condensate may either be directed into a low-pressure evaporator 42 (LPEVAP) or toward an intermediate-pressure economizer 44 (IPECON). Steam from the low-pressure evaporator 42 may be returned to the low-pressure section 26 of the steam turbine 22. It should be noted that heated fluid from the air bleed and energy recovery system 13, as described in greater detail below, may be used to generate steam within the low-pressure evaporator 42.

Likewise, from the intermediate-pressure economizer 44, the condensate may either be directed into an intermediate-pressure evaporator 46 (IPEVAP) or toward a high-pressure economizer 48 (HPECON). In addition, water from the intermediate-pressure economizer 44 may be sent to a fuel gas heater (not shown) where the water may be used to heat fuel gas for use in the combustion chamber 18 of the gas turbine 12. Steam from the intermediate-pressure evaporator 46 may be sent to the intermediate-pressure section 28 of the steam turbine 22. Again, it should be noted that heated fluid from the air bleed and energy recovery system 13, as described in greater detail below, may be used to generate steam within the intermediate-pressure evaporator 46.

Finally, condensate from the high-pressure economizer 48 may be directed into a high-pressure evaporator 50 (HPEVAP). Steam exiting the high-pressure evaporator 50 may be directed into a primary high-pressure superheater 52 and a finishing high-pressure superheater 54, where the steam is superheated and eventually sent to the high-pressure section 30 of the steam turbine 22. Again, it should be noted that heated fluid from the air bleed and energy recovery system 13, as described in greater detail below, may be used to generate steam within the high-pressure evaporator 50. Exhaust from the high-pressure section 30 of the steam turbine 22 may, in turn, be directed into the intermediate-pressure section 28 of the steam turbine 22, and exhaust from the intermediate-pressure section 28 of the steam turbine 22 may be directed into the low-pressure section 26 of the steam turbine 22. It should also be noted that the connections between the economizers, evaporators, and the steam turbine 22 may vary across implementations as the illustrated embodiment is merely illustrative of the general operation of an HRSG system that may employ unique aspects of the present embodiments.

An inter-stage attemperator 56 may be located in between the primary high-pressure superheater 52 and the finishing high-pressure superheater 54. The inter-stage attemperator 56 may allow for more robust control of the exhaust temperature of steam from the finishing high-pressure superheater 54. Specifically, the inter-stage attemperator 56 may be configured to control the temperature of steam exiting the finishing high-pressure superheater 54 by injecting cooler feedwater spray into the superheated steam upstream of the finishing high-pressure superheater 54 whenever the exhaust temperature of the steam exiting the finishing high-pressure superheater 54 exceeds a predetermined value.

In addition, exhaust from the high-pressure section 30 of the steam turbine 22 may be directed into a primary re-heater 58 and a secondary re-heater 60 where it may be reheated before being directed into the intermediate-pressure section 28 of the steam turbine 22. The primary re-heater 58 and secondary re-heater 60 may also be associated with an inter-stage attemperator 62 for controlling the exhaust steam temperature from the re-heaters. Specifically, the inter-stage attemperator 62 may be configured to control the temperature of steam exiting the secondary re-heater 60 by injecting cooler feedwater spray into the superheated steam upstream of the secondary re-heater 60 whenever the exhaust temperature of the steam exiting the secondary re-heater 60 exceeds a predetermined value.

In combined cycle systems such as system 10, hot exhaust may flow from the gas turbine 12 and pass through the HRSG 32 and may be used to generate high-pressure, high-temperature steam. The steam produced by the HRSG 32 may then be passed through the steam turbine 22 for power generation. In addition, the produced steam may also be supplied to any other processes where superheated steam may be used. The gas turbine 12 generation cycle is often referred to as the "topping cycle," whereas the steam turbine 22 generation cycle is often referred to as the "bottoming cycle." By combining these two cycles as illustrated in FIG. 1, the combined cycle power generation system 10 may lead to greater efficiencies in both cycles. In particular, exhaust heat from the topping cycle may be captured and used to generate steam for use in the bottoming cycle.

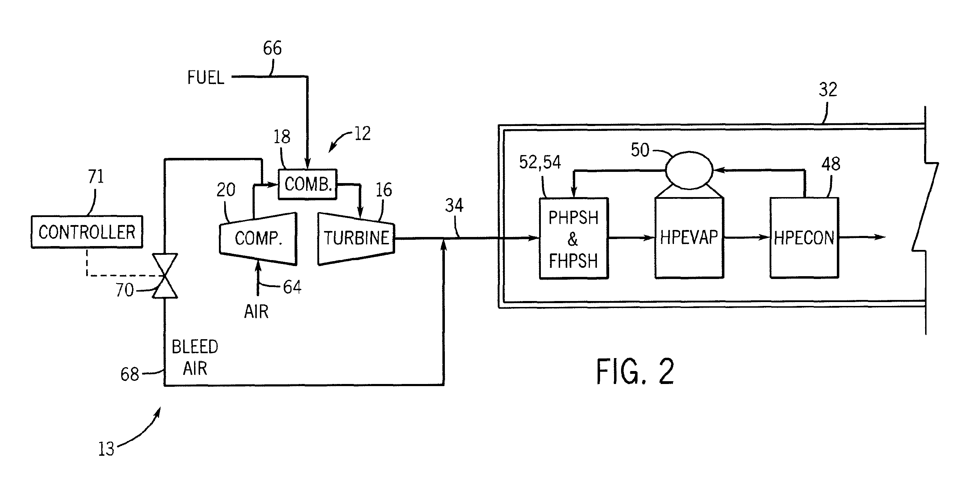

Therefore, the main component of the topping cycle of the combined cycle power generation system 10 is the gas turbine 12. FIG. 2 is schematic flow diagram of an exemplary embodiment of the air bleed and energy recovery system 13 coupled to the gas turbine 12 and the HRSG 32 of the combined cycle power generation system 10 of FIG. 1. As illustrated in FIG. 2, the compressor 20 of the gas turbine 12 may receive and compress air 64. The compressor 20 may direct the compressed air into the combustion chamber 18 of the gas turbine 12. A fuel source 66 may be mixed with the compressed air received from the compressor 20 and burned within the combustion chamber 18. The hot gases from the combustion chamber 18 may then be directed into the turbine 16 of the gas turbine 12. The pressure/flow of the hot gases drives blades in the turbine 16 to rotate a shaft, which in turn drives the load 14.

In certain applications, the gas turbine 12 pressure ratio may reach a limit for the compressor 20. For instance, in applications where low-BTU fuels are used as fuel sources in the combustion chamber 18, or in locations characterized by lower ambient temperatures, the compressor 20 pressure ratio (i.e., the ratio of the air pressure exiting the compressor 20 to the air pressure entering the compressor 20) may become lower than the turbine 16 pressure ratio (i.e., the ratio of the hot gas pressure exiting the turbine 16 to the hot gas pressure entering the turbine 16). In order to provide compressor 20 pressure ratio protection (i.e., prevent the compressor 20 from stalling), air discharged from the compressor 20 may be bled off via the air bleed and energy recovery system 13.

The amount of air bled from the compressor 20 may be a function of ambient conditions and the gas turbine 12 output. More specifically, the amount of air bled may increase with lower ambient temperatures and lower gas turbine 12 loads. In addition, as described above, in gas turbine 12 applications utilizing low-BTU fuel sources 66, the flow rate of the fuel source 66 will generally be much higher than in comparable natural gas fuel applications. This is primarily due to the fact that more low-BTU fuel must be used in order to attain comparable heating. As such, additional backpressure may be exerted on the compressor 20. In these applications, the air discharged from the compressor 20 may also be bled to reduce the backpressure and improve the stall margin (i.e., margin of design error for preventing stalling) of the compressor 20.

However, bleeding compressed air discharged from the compressor 20 may decrease the net efficiency of the combined cycle power generation system 10, because the energy expended to raise the pressure of the air 64 within the compressor 20 is not recovered by the combustion chamber 18 and turbine 16 of the gas turbine 12. However, the energy introduced into the bleed air 68 discharged from the compressor 20 need not be wasted. Rather, using the various embodiments of the air bleed and energy recovery system 13, the energy in the bleed air 68 may be recaptured.

One technique for recapturing the energy in the bleed air 68 may be to introduce the bleed air 68 into the flow of heated exhaust gas 34 from the turbine 16 of the gas turbine 12. The flow of the bleed air 68 may, for instance, be controlled by a bleed control valve 70. In addition, one or more controllers 71 of the combined cycle power generation system 10 may be used to control the operation of the bleed control valve 70, as well as other valves and equipment described herein, to ensure that an adequate amount of compressed air is bled from the compressor 20. In particular, the controller(s) 71 may take into consideration operating parameters of the compressor 20, as well as operating parameters of the other components of the gas turbine 12, to determine how much compressed air to bleed off from the compressor 20. For instance, the controller(s) 71 may take into consideration the pressure ratio of the compressor 20, the pressure ratio of the turbine 16, and so forth.

By combining the bleed air 68 with the heated exhaust gas 34 from the gas turbine 12, the energy in the bleed air 68 may be recaptured within the HRSG 32. Specifically, the energy (e.g., heat) within the bleed air 68 may be used to help generate steam for use in the steam turbine 22 via the high-pressure economizer 48, high-pressure evaporator 50, primary high-pressure superheater 52 (PHPSH), finishing high-pressure superheater 54 (FHPSH), and the other heat transfer components of the HRSG 32, described above in greater detail with respect to FIG. 1. Therefore, this technique has an advantage over simply venting the bleed air 68 into the atmosphere, because the heat and mass flow of the bleed air 68 may be used to recover additional energy within the bottoming cycle of the combined cycle power generation system 10.

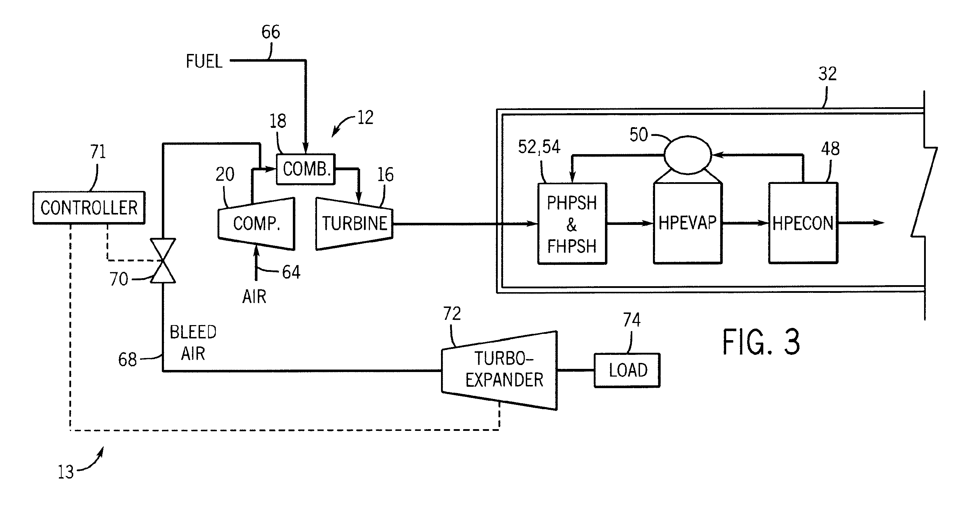

However, even more efficient techniques for recovering energy in the bleed air 68 may be implemented. For instance, FIG. 3 is a schematic flow diagram of an exemplary embodiment of the air bleed and energy recovery system 13 coupled to the gas turbine 12 and the HRSG 32 of the combined cycle power generation system 10 of FIG. 1, utilizing a turbo-expander 72 for recovering energy in the bleed air 68. In the illustrated embodiment, instead of being directed into the flow of heated exhaust gas 34 from the turbine 16 of the gas turbine 12, the bleed air 68 from the compressor 20 may be directed into the turbo-expander 72. The turbo-expander 72 may, for instance, be a turbine through which high-pressure gases may be expanded to produce work. However, the turbo-expander 72 may also be any suitable equipment capable of recovering the pressure of the bleed air 68. Within the turbo-expander 72, the bleed air 68 may be expanded within the turbo-expander 72 to generate a separate source of power, which may be used to drive a supplementary load 74 (e.g., a supplementary electrical generator). By directly capturing the energy stored within the bleed air 68, the efficiency of the energy recovery sub-process may remain relatively high.

However, since the bleed air 68 from the compressor 20 may be characterized by relatively high temperatures and pressures, the actual turbo-expander used would be sized accordingly to tolerate higher temperatures. As such, the turbo-expander 72 could, in certain applications, be somewhat bulky and expensive. Therefore, it may be advantageous to reduce the temperature of the bleed air 68 prior to directing it into the turbo-expander 72. By doing so, the turbo-expander 72 may be sized to handle lower temperatures and, therefore, may be less bulky and expensive than if the bleed air 68 were not cooled, as with the embodiment illustrated in FIG. 3. In particular, the turbo-expander 72 may, in such an embodiment, be selected without resorting to expensive, high temperature resistant materials for the turbo-expander 72.

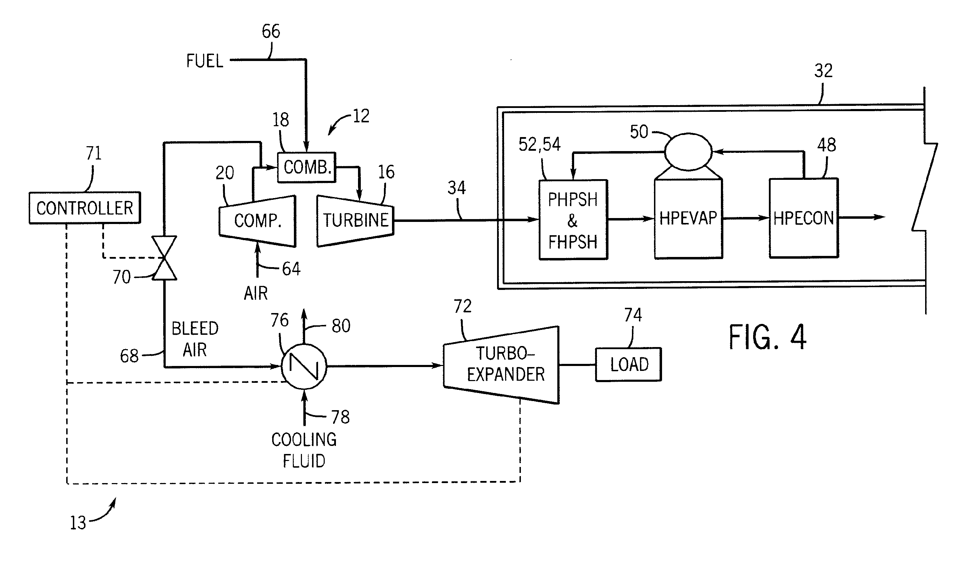

FIG. 4 is a schematic flow diagram of an exemplary embodiment of the air bleed and energy recovery system 13 coupled to the gas turbine 12 and the HRSG 32 of the combined cycle power generation system 10 of FIG. 1, utilizing both a turbo-expander 72 and an associated pre-cooling unit 76. In this embodiment, the bleed air 68 from the compressor 20 may be cooled by the pre-cooling unit 76 before being expanded within the turbo-expander 72. In particular, a cooling fluid 78 may be used by the pre-cooling unit 76 to help reduce the temperature of the bleed air 68 prior to the bleed air 68 being directed into the turbo-expander 72. More specifically, heat within the bleed air 68 may be transferred into the cooling fluid 78 within the pre-cooling unit 76. The pre-cooling unit 76 may include any suitable heat transfer components capable of transferring heat from the bleed air 68 to the cooling fluid 78. For instance, the pre-cooling unit 76 may be a simple heat exchange device, such as a fin-and-tube heat exchanger, or may be a more complex heat exchange unit. In addition, the cooling fluid 78 used by the pre-cooling unit 76 to cool the bleed air 68 may be any suitable liquid or gas, such as boiler feedwater, capable of extracting heat from the bleed air 68. In addition, it should be noted that a refrigeration cycle may be used with a refrigerant being used as the cooling fluid 78.

The heated fluid 80 discharged from the pre-cooling unit 76 may, in turn, be used by other processes within or external to the combined cycle power generation system 10. For instance, the heated fluid 80 may be introduced into components of the HRSG 32, where the heated fluid 80 may be used to help recover additional energy, e.g., via steam generation in the HRSG 32. In addition, it should be noted that heat may also be recovered from the bleed air 68 after the bleed air 68 has been discharged from the turbo-expander 72. For instance, the discharged bleed air 68 may be combined with the heated exhaust gas 34 from the turbine 16 of the gas turbine 12, for use in the HRSG 32.

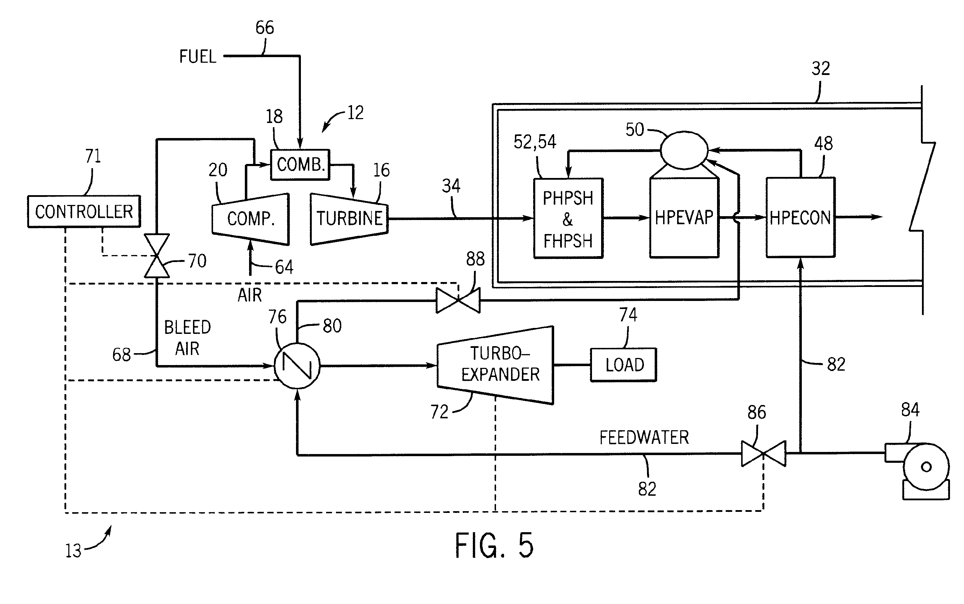

The concept of recapturing energy from the heated fluid 80 discharged from the pre-cooling unit 76, as shown in FIG. 4, may be extended to other embodiments. For example, FIG. 5 is a schematic flow diagram of an exemplary embodiment of the air bleed and energy recovery system 13 coupled to the gas turbine 12 and the HRSG 32 of the combined cycle power generation system 10 of FIG. 1. As illustrated, the air bleed and energy recovery system 13 uses the turbo-expander 72 and associated pre-cooling unit 76 of FIG. 4, wherein boiler feedwater 82 from a high-pressure boiler feedwater pump 84 is used as the cooling fluid 78. The high-pressure boiler feedwater pump 84 may otherwise be used, for instance, to supply boiler feedwater 82 to the high-pressure economizer 48 of the HRSG 32. In particular, the boiler feedwater 82 may be heated by the high-pressure economizer 48 and sent to the high-pressure evaporator 50 as condensate. Within the high-pressure evaporator 50, high-pressure steam may be generated from the condensate. The high-pressure steam may subsequently be directed into the primary and finishing high-pressure superheaters 52, 54, among other components of the HRSG 32, for superheating and eventual use within the high-pressure section 30 of the steam turbine 22 of the combined cycle power generation system 10.

However, in the embodiment illustrated in FIG. 5, a portion of the boiler feedwater 82 may also be directed into the pre-cooling unit 76. The flow of boiler feedwater 82 into the pre-cooling unit 76 may, for instance, be controlled by a flow control valve 86. In particular, the flow control valve 86 may be configured to control the flow of the boiler feedwater 82 between the pre-cooling unit 76 and the high-pressure economizer 48 of the HRSG 32. The boiler feedwater 82 directed into the pre-cooling unit 76 may be used as the cooling fluid 78, which may extract heat from the bleed air 68 within the pre-cooling unit 76. The heat transferred into the heated fluid 80 discharged from the pre-cooling unit 76 may be recaptured, for instance, by being directed into the high-pressure evaporator 50 of the HRSG 32 as condensate. As with the condensate from the high-pressure economizer 48, the heated fluid 80 directed into the high-pressure evaporator 50 may also be converted into steam for ultimate use within the high-pressure section 30 of the steam turbine 22 of the combined cycle power generation system 10. Therefore, additional energy may again be recovered within the bottoming cycle of the combined cycle power generation system 10.

The flow of the heated fluid 80 into the high-pressure evaporator 50 may be controlled by a pressure control valve 88. In addition, since the heated fluid 80 (e.g., heated boiler feedwater 82 from the boiler feedwater pump 84) will generally be at a higher pressure than the pressure in the high-pressure evaporator 50 drum, the pressure control valve 88 downstream of the pre-cooling unit 76 may also be used to control the pressure of the heated fluid 80 before sending it into the high-pressure evaporator 50 drum.

It should be noted that while certain embodiments described herein have been presented in the context of utilizing high-pressure components of the HRSG 32 and associated equipment (e.g., high-pressure boiler feedwater pump 84, high-pressure economizer 48, high-pressure evaporator 50, and so forth), any components of the HRSG 32 and associated equipment may, in fact, be utilized. For example, the boiler feedwater 82 used within the pre-cooling unit 76 may be supplied from an intermediate-pressure boiler feedwater pump. Regardless of the particular equipment used in any particular application, the underlying methods for recovering energy from bleed air 68 from the compressor 20 of the gas turbine 12 may prove beneficial.

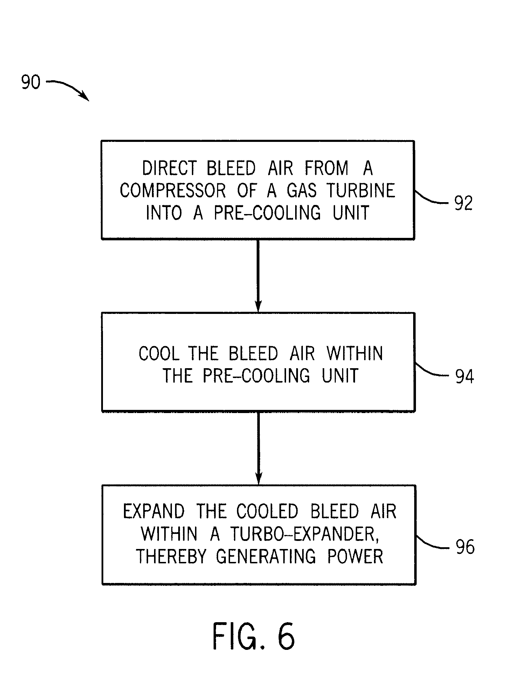

FIG. 6 is a flow chart of an embodiment of a method 90 for recovering energy from bleed air 68 from the compressor 20 of the gas turbine 12 of the combined cycle power generation system 10 of FIG. 1. The method 90 may be a computer-implemented method, which may be executed as computer code stored on machine-readable media within one or more computers. In step 92, bleed air 68 from the compressor 20 may be directed into the pre-cooling unit 76. As described above, the flow of bleed air 68 from the compressor 20 may be controlled by the bleed control valve 70 and the controller(s) 71. The bleed air 68 is the compressed air from the compressor 20 which is not directed into the combustion chamber 18 of the gas turbine 12. In other words, in the present context, any compressed air from the compressor 20 not directed into the combustion chamber 18 will be directed into the pre-cooling unit 76. However, in actual operation, a certain amount of compressed air from the compressor 20 may neither be directed into the combustion chamber 18 or the pre-cooling unit 76. For instance, other processes within or external to the combined cycle power generation system 10 may utilize the compressed air from the compressor 20. However, in the present context, the bleed air 68 represents the amount of compressed air not directed into the combustion chamber 18 of the gas turbine 12 for the purpose of protecting the compressor 20 against surge, stall, and choke conditions, as described above.

In step 94, the bleed air 68 may be cooled within the pre-cooling unit 76. Cooling the bleed air 68 within the pre-cooling unit 76 may include transferring heat from the bleed air 68 into the cooling fluid 78 received by the pre-cooling unit 76. As described above, the particular components of the pre-cooling unit 76 and the cooling fluid 78 used may vary from application to application. However, in certain embodiments, the cooling fluid 78 used may be boiler feedwater 82 from a high-pressure boiler feedwater pump 84. The boiler feedwater 82 may be received by the pre-cooling unit 76, wherein heat from the bleed air 68 may be transferred into the boiler feedwater 82. As described above, the heat transferred into the resultant heated fluid 80 may also be recovered. For instance, in the embodiment where the boiler feedwater 82 is used as the cooling fluid 78, the heated fluid 80 (i.e., heated boiler feedwater 82) may be directed into the drum of the high-pressure evaporator 50 of the HRSG 32. Within the high-pressure evaporator 50, the heated fluid 80 may be converted into steam, which may ultimately be used in the bottoming cycle of the combined cycle power generation system 10.

In step 96, the cooled bleed air 68 may be expanded within the turbo-expander 72, thereby generating power. In particular, the cooled bleed air 68 may be used to drive blades of the turbo-expander 72, causing rotation suitable for driving any suitable load 74. For example, the generated power may be used to drive an electrical generator for producing supplementary electrical power.

Technical effects of the invention include bleeding compressed air from the compressor 20 of the gas turbine 12 of the combined cycle power generation system 10. The bleed air 68 may be expanded within the turbo-expander 72, thereby generating power which may drive various loads 74, such as an electrical generator. By expanding the bleed air 68 within the turbo-expander 72 to generate power, energy expended within the compressor 20 to compress the bleed air 68 may be recaptured.

In addition, prior to expansion within the turbo-expander 72, the bleed air 68 may be cooled within the pre-cooling unit 76. By reducing the temperature of the bleed air 68, the turbo-expander 72 may be sized to handle lower temperatures, thereby reducing the cost of the turbo-expander 72. More specifically, since there may be no need for expensive, high temperature resistant materials for the turbo-expander 72, a less expensive, standard, off-the-shelf turbo-expander 72 may be used. In addition to the reduced costs, these lower temperature turbo-expanders may also be more readily available with more vendors selling them, quicker turnaround times, and so forth.

Furthermore, heat transferred into the cooling fluid 78 (e.g., the boiler feedwater 82) within the pre-cooling unit 76 may also be recaptured. For example, as described above, the heated fluid 80 discharged from the pre-cooling unit 76 may be directed into the HRSG 32, where heat from the heated fluid 80 may be used to generate steam used in the bottoming cycle of the combined cycle power generation system 10. An advantage of using the boiler feedwater 82 as the cooling fluid 78 within the pre-cooling unit 76 may be that either the same boiler surface area may generate more steam or the boiler surface area may be reduced while maintaining the same steam cycle power.

It should be noted that while embodiments described herein have generally been presented in the context of the combined cycle power generation system 10, the techniques described herein are not limited to combined cycle power generation systems. Indeed, energy may be recaptured from bleed air from compressors of simple gas turbines as well. For instance, the pre-cooling unit 76 and turbo-expander 72 presented herein may cool and expand, respectively, compressed air bled from a compressor of a simple gas turbine in the same manner as compressed air bled from the compressor 20 of the combined cycle gas turbine 12 presented herein. Furthermore, heat within the heated fluid 80 discharged from the pre-cooling unit 76 need not necessarily be recovered within the HRSG 32 of the combined cycle power generation system 10. Indeed, this heat may be recaptured in various other processes, such as standalone boiler systems.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method for recovering energy from compressed air from a compressor of a gas turbine, the method comprising:
   directing bleed air from a compressor of a gas turbine into a cooling unit, wherein the bleed air is compressed air from the compressor, and the bleed air is not directed into a combustion chamber of the gas turbine;
   cooling the bleed air within the cooling unit; and
   expanding the cooled bleed air within a turbo-expander to generate power.
2. The method of clause 1, comprising:
   transferring heat from the bleed air to a cooling fluid within the cooling unit;
   directing the heated cooling fluid from the cooling unit into a bottoming cycle of a heat recovery steam generation system;
   generating power by expanding the cooled second portion of the compressed air within a turbo-expander; and
   driving an electrical generator using the power generated by the turbo-expander.
3. The method of any preceding clause, comprising driving an electrical generator using the power generated by the turbo-expander.
4. The method of any preceding clause, comprising controlling the flow of the bleed air via a controller and a bleed control valve.
5. The method of any preceding clause, wherein controlling the flow of the bleed air is based on a pressure ratio of the compressor.
6. The method of any preceding clause, wherein cooling the bleed air comprises transferring heat from the bleed air to a cooling fluid within the cooling unit.
7. The method of any preceding clause, comprising transferring heat from the bleed air to boiler feedwater received from a boiler feedwater pump.
8. The method of any preceding clause, comprising recovering heat transferred into the boiler feedwater.
9. The method of any preceding clause, comprising recovering heat transferred into the boiler feedwater by directing the heated boiler feedwater into a drum of an evaporator of a heat recovery steam generation system.
10. A gas turbine power generation system, comprising:
   a gas turbine comprising a compressor, a combustion chamber, and a turbine component;
   a cooling unit configured to receive and cool bleed air from the compressor, wherein
   the bleed air is compressed air from the compressor, and the bleed air is not directed into the combustion chamber; and
   a turbo-expander configured to receive and expand the cooled bleed air to generate power.
11. The system of clause 10, comprising a generator configured to be driven by power generated by the turbo-expander.
12. The system of clause 10 or 11, comprising a controller and a bleed air valve configured to control the flow of bleed air to the cooling unit and turbo-expander.
13. The system of any of clauses 10 to 12, wherein the cooling unit is configured to receive a cooling fluid and to transfer heat from the bleed air into the cooling fluid.
14. The system of any of clauses 10 to 13, wherein the cooling unit is configured to receive boiler feedwater from a boiler feedwater pump and to transfer heat from the bleed air into the boiler feedwater.
15. The system of any of clauses 10 to 14, comprising a flow control valve configured to control the flow of the boiler feedwater between the cooling unit and a component of a heat recovery steam generation system.
16. The system of any of clauses 10 to 15, wherein the cooling unit is configured to direct the heated boiler feedwater into a drum of an evaporator of the heat recovery steam generation system.
17. The system of any of clauses 10 to 16, comprising a pressure control valve configured to control the pressure and flow of the heated boiler feedwater from the cooling unit.
18. A bleed air and energy recovery system, comprising:
   a cooling unit configured to receive and cool bleed air from a compressor; and
   a turbo-expander configured to receive and expand the cooled bleed air to generate power.
19. The system of any of clauses 10 to 18, comprising a generator configured to be driven by the turbo-expander.
20. The system of any of clauses 10 to 19, comprising a controller and a bleed air valve configured to control the flow of bleed air to the cooling unit and turbo-expander.

## Claims

1. A method for recovering energy from compressed air from a compressor (20) of a gas turbine (12), the method comprising:
directing bleed air (68) from a compressor (20) of a gas turbine (12) into a cooling unit (76), wherein the bleed air (68) is compressed air from the compressor (20), and the bleed air (68) is not directed into a combustion chamber (18) of the gas turbine (12);
cooling the bleed air (68) within the cooling unit (76); and
expanding the cooled bleed air (68) within a turbo-expander (72) to generate power.

2. The method of claim 1, comprising:
transferring heat from the bleed air (68) to a cooling fluid (78, 82) within the cooling unit (76);
directing the heated cooling fluid (80) from the cooling unit (76) into a bottoming cycle of a heat recovery steam generation system (32);
generating power by expanding the cooled second portion of the compressed air within a turbo-expander (72); and
driving an electrical generator (74) using the power generated by the turbo-expander (72).

3. A gas turbine power generation system, comprising:
a gas turbine (12) comprising a compressor (20), a combustion chamber (18), and a turbine component (16);
a cooling unit (76) configured to receive and cool bleed air (68) from the compressor (20), wherein the bleed air (68) is compressed air from the compressor (20), and the bleed air (68) is not directed into the combustion chamber (18); and
a turbo-expander (72) configured to receive and expand the cooled bleed air (68) to generate power.

4. The system of claim 3, comprising a generator (74) configured to be driven by power generated by the turbo-expander (72).

5. The system of claim 3 or claim 4, comprising a controller (71) and a bleed air valve (70) configured to control the flow of bleed air (68) to the cooling unit (76) and turbo-expander (72).

6. The system of any of claims 3 to 5, wherein the cooling unit (76) is configured to receive a cooling fluid (78, 82) and to transfer heat from the bleed air (68) into the cooling fluid (78, 82).

7. The system of any of claims 3 to 6, wherein the cooling unit (76) is configured to receive boiler feedwater (82) from a boiler feedwater pump (84) and to transfer heat from the bleed air (68) into the boiler feedwater (82).

8. The system of any of claims 3 to 7, comprising a flow control valve (86) configured to control the flow of the boiler feedwater (82) between the cooling unit (76) and a component (48) of a heat recovery steam generation system (32).

9. The system of any of claims 3 to 8, wherein the cooling unit (76) is configured to direct the heated boiler feedwater (80) into a drum of an evaporator (50) of the heat recovery steam generation system (32).

10. The system of any of claims 3 to 9, comprising a pressure control valve (88) configured to control the pressure and flow of the heated boiler feedwater (80) from the cooling unit (76).
